# EUROPEAN PATENT SPECIFICATION

(11) **EP 1 011 326 B1**
(45) Date of publication and mention of the grant of the patent: **17.10.2001**
(21) Application number: 96921184.6
(22) Date of filing: 12.06.1996
(51) Int. Cl.: A01M 23/24, A01M 23/28

(54) **A TRAP FOR CATCHING AND KILLING OF SMALL ANIMALS**
FALLE ZUM FANGEN UND TÖTEN VON KLEINTIEREN
PIEGE POUR ATTRAPER ET TUER DE PETITS ANIMAUX

(30) Priority: 21.06.1995 SE 9502253
(43) Date of publication of application: 28.06.2000
(73) Proprietor: Hansson, Göran, 360 24 Linneryd (SE)
(72) Inventor: Hansson, Göran, 360 24 Linneryd (SE)
(74) Representative: Lundquist, Arne
(86) International application number: PCT/SE96/00771
(87) International publication number: WO 97/00607

(56) References cited:
- GB-A- 101 760
- GB-A- 2 252 485
- NO-C- 37 719

## Description

The present invention relates to a trap for trapping and killing of small animals, like rats and mice, comprising a stand, a pivoting clamp means, journalled around a first axis, which clamp means can be strained against the action of a force means like a spring, and which can be released by a releasing means from a first, loaded position, when an animal acts upon the releasing means so that the clamp means substantially immediately swings, acted upon by the force means, to a second position, where it hits and kills the animal, the clamp means, extending from the first axis, being provided with a first and a second arm, a first fastening point of said force means being provided at the end, that is turned from the first axis of the first arm, the second fastening point of the force means being provided at the stand, the force line between the two fastening points of the force means running through or in the vicinity of said first axis, so that the force means exerts no or just a minor torque in the direction towards the second position of the clamp means, when the clamp means is in its first position.

Similar traps are known since a long time see GB 101760 A and NO 37719 C1. They may for instance comprise a stand in the form of a plate, at which a clamp means may be stretched against the force of a screw spring, arranged around its turning axis to a loaded position, in which a lock pin keeps the clamp means at the plate. The free end of the lock pin is inserted in the loop of a locking means in the form of a movable plate, at which the bait is fixed, e g in the form of a piece of cheese.

Traps of this type have some limitations and drawbacks. It is relatively troublesome and hazardous to load such traps, and positively two hands are required. It happens frequently, that the trap hits the fingers of the user. Furthermore the animal can often remove the bait by careful action without bringing the trap to act.

The object of the present invention is thus to provide a trap of the type mentioned introductorily, which can be handled safely and that can be loaded with one single hand, and that allows the utilization of any type of bait, even liquid, and that does positively not admit the bait to be removed without bringing the trap to act.

According to the invention such a trap is characterized primarily in that the releasing means is journalled around a second axis in the stand, forming a first arm portion designed like a cap above a vessel for bait, and a second arm portion acting upon the first arm of the clamp means when the cap is lifted by the animal.

Within the scope of the invention, several embodiments are conceivable. In one suitable embodiment the second arm portion of the releasing means is provided with a locking means, that locks the first arm of the clamp means, when said arm is in its said first position, which locking means releases the first arm of the clamp means when the cap is lifted by the animal.

In one suitable embodiment of the trap according to the invention there is provided a stop device for preventing the clamp means from being turned to let the first arm of the clamp means take a position in which the second arm portion of the releasing means cannot act upon the first arm of the clamp means.

In one further suitable embodiment there is provided guide means for guiding small animals to the bait, preventing larger animals from acting upon the releasing means.

It is advantageous to design the stand with a portion like a platform, extending backwards from the vessel. The object is that the animal shall stand with the front legs on the platform when it is in a position to be hit by the clamp means.

Advantageously the cap and the container are designed in such a way, that the bait is optically and from the smell, observable to the animal.

The invention is described in the following with one example of embodiment, which is not limiting, reference being made to the enclosed, schematical figures, of which:
Figure 1 shows a side view of one embodiment of a trap according to the invention, partly in section,
figure 2 shows a side view of an alternative embodiment of a trap according to the invention, partly in section,
figure 3 shows a side view of a trap according to the invention, with a guide means in section,
figure 4A shows a side view of the same trap, with an alternative guide means,
figure 4B shows a view of a parting wall for the guide means in figure 2A,
figure 5 shows a plan view of a trap according to the invention, partly in section.
figure 6 shows a plan view of a trap according to the invention,
figure 7 shows a view in the direction towards the container of the trap,
figure 8 shows a perspectivic view of an embodiment of cap with container,
figure 9 shows a perspectivic view of a shell for including of the trap,
figure 10 shows an alternative embodiment of a shell for including of the trap, whilst
figure 11 shows a side view of a shell, in section, for including of the trap, with a trap.

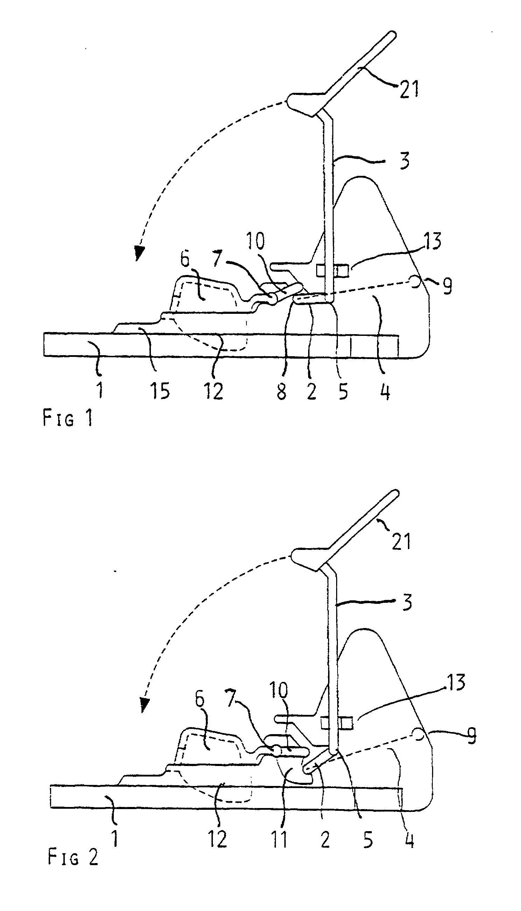

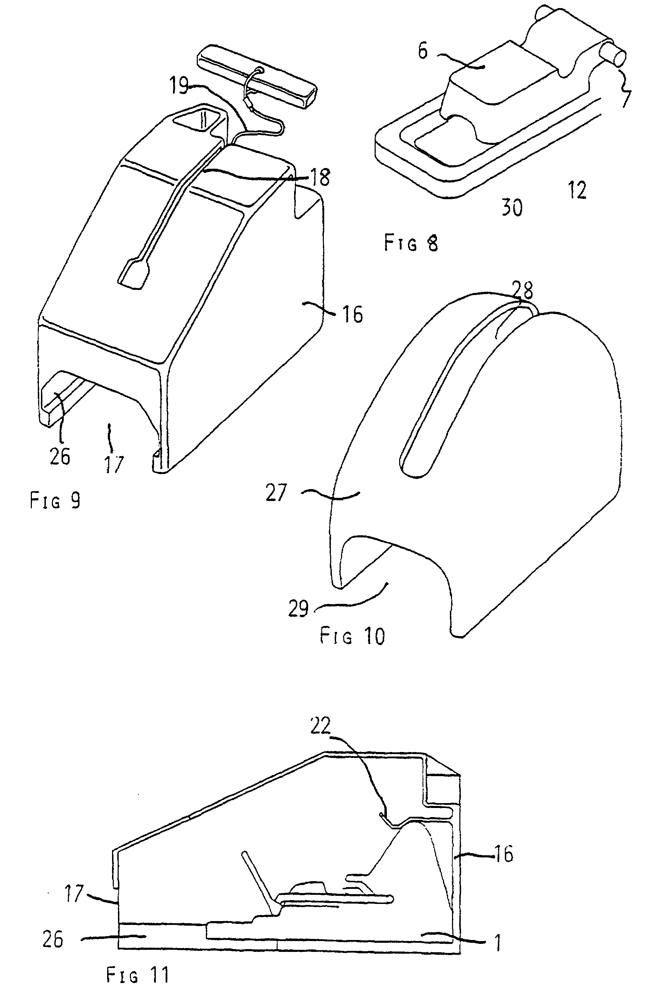

In figure 1 a plane stand is denoted by 1. A clamp means is journalled artound a transversal, horizontal first axis 5. The clamp means comprises a first arm 2 and a second arm 3, both extending from said first axis 5, forming, in the trap shown, approximatively a mutual right angle. In the figures the clamp means is in a first, loaded position, against the tensile force of a screw spring 4, which is fastened, partly in the outer part 8 of the first arm 2, and partly in the rear part 9 of the stand. The second arm 3 rests against a stop device 13, and the force line of the screw spring 4 runs a little, but not very much, above the first axis 5. Thereby the screw spring does not exert any turning moment on the clamp means in the direction towards the animal, that is to say against a second position, where the clamp means can hit the animal, killing it. A container 12 is provided, and covering this a cap 6, journalled around a second horizontal axis 7. The cap is connected to a second arm portion 10, which extends from the second arxis 7 in such a way, that when the cap 6 is locked, the second arm portion 10 is above, and in contact with the first arm 2 of the clamp means. If now an animal lifts the cap 6, which is made easy by the design, which can be seen in figure 7, of the cap 6 and the container 12 with recesses in those parts, that are directed towards the entrance place of the animal, the second arm portion 10 will press down the first arm 2 past the neutral position of the screw spring, whereupon the screw spring exerts a quickly increasing tensile force, so that the clamp means more or less immediately hits against its second position, killing the animal. Thus the cap 6 forms, together with the second arm portion 10, a releasing means.Their design shall be such, that the bait is optically and/or from the smell, observable to the animal. In figure 8 there is shown how the container can be extended in the direction towards the animal with a portion 30, which can also be formed like a narrow slot. The animal is led by the bait in this portion or slot in the direction of the cap 6 and lifts same to get in touch with the bait under the cap.

The stop device 13 has for an object to prevent the clamp means from being inadvertently turned so that the first arm 2 gets in such a position, that the second arm portion 10 of the releasing means cannot act upon the first arm 2 of the clamp means in the intended way. It can be seen, that the stand 1 is designed with a platform 15, extending rearwards from the container 12. The object is, that the animal shall stand with its both front legs on the platform when it is in a desired position for being killed. The outer part of the second arm 3 may suitably be designed like a loop, as is seen on figures 6 and 7. Such a design facilitates the handling of the trap.

In figure 2 there is shown an alternative embodiment of the trap according to the invention. Here the second arm portion 10 of the releasing means is provided with a securing memeber 11, which locks the first arm of the clamp means when this is in its said first, loaded position. The object is to prevent, that the trap is released inadvertently by a thrust from the rear on the second arm 3 of the clamp means. The securing member releases the first arm of the clamp means 2 when the cap 3 is lifted by the animal. In the trap shown the force line of the screw spring 4 runs below the first axis 5 in the first, loaded posiiton, whereby the screw spring in this position exerts a certain but minor turning moment on the clamp means in the direction towards its second position.
This turning moment thus is counteracted upon by said securing member 11.

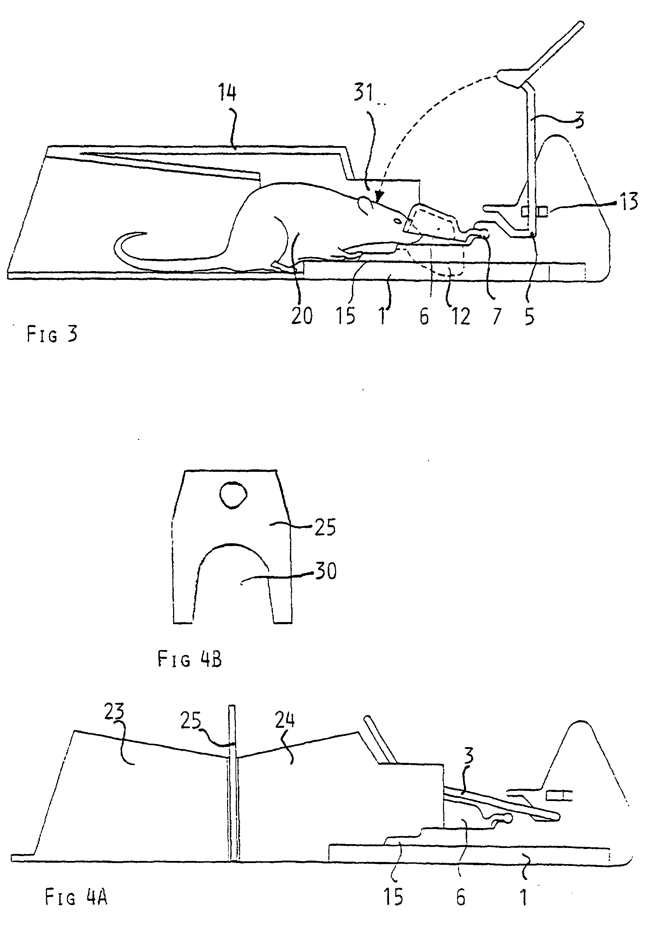

In figure 3 there is shown in sectiona guide means 14 in the form of a funnel. The object of the latter is to guide animals of a desired size to the container 12 and the cap 6, in order to prevent animals to get in touch with the bait from The side, the funnel is provided with two sidewalls 31, one of which is indicated in figure 3. The funnel and the sidewalls are designed in such a way, that the clamp means with its second arm 3 has free way down to the head of the animal when the animal lifts the cap. It is important, that the guide means has a floor, in connection with the walls, so that the animal cannot enter the guide means and tilt the trap.

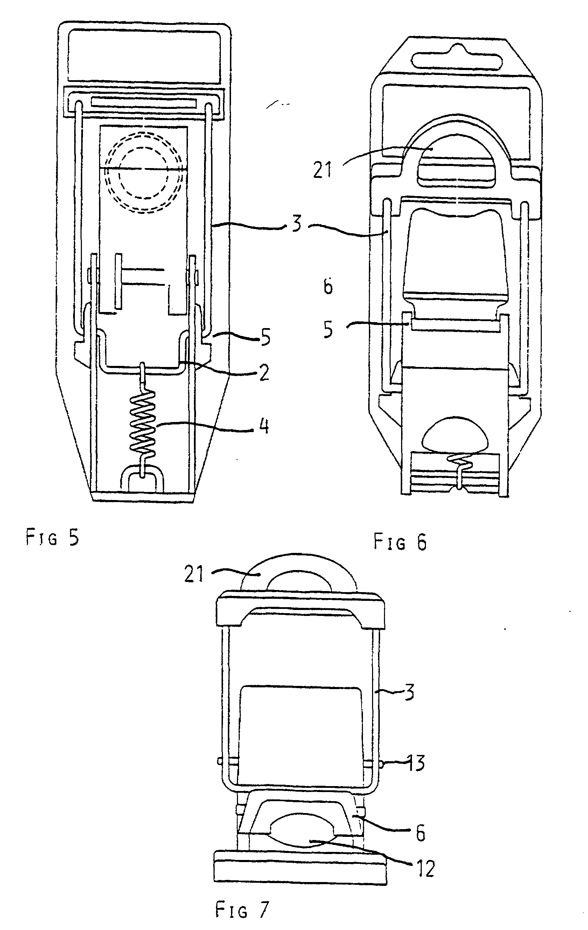

An alternative design of a guide means is seen in figure 4A. Here the guide means consists of a first funnel department 23, a transversal vertically displaceable cross wall 25 and a second funnel department 24 in direct connection to the trap, as has been described referring to figure 3. The cross wall 25 is provided with an opening 30, that can be adapted to animals of a desired maximum size.

In figures 9,10 and 11 there are shown two embodiments of a shell, into which the trap can be inserted and loaded. The shell 16 in figure 9 is designed, at the front side, with a first opening 17, adapted to the desired maximum size of animals, that shall be trapped. The shell is provided with inner grooves 26, wherein the trap is inserted to a rear position, where it is snapped fixed with a snap in means 22. The shell with snap in means is suitably manufactured from plastic.The shell is, in this embodiment, provided at the upper side with a relatively small groove 18, wherein a string 19 or the like can be led to load the trap.

The embodiment of a shell, that is shown in figure 10, with reference number 27, is provided with an opening 29 of a size, that gives the maximum size of an animal to be trapped, and is provided with a relatively broad groove 28, that admits, that the trap is loaded by a finger.

## Claims

1. A trap for trapping and killing of small animals, like rats and mice, comprising a stand (1), a pivoting clamp means, journalled in the stand around a first axis (5), which clamp means can be strained against the action of a force means (4) like a spring, and which can be released by a releasing means from a first, loaded position, when an animal acts upon the releasing means, so that the clamp means substantially immediately swings, acted upon by the force means, to a second position, where it hits and kills the animal, the clamp means, extending from the first axis (5), being provided with a first (2) and a second (3) arm, a first fastening point (8) of said force means being provided at the end, that is turned from the first axis (5) of the first arm (2), the second fastening point (9) of the force means being provided at the stand, the force line between the two fastening points of the force means running through or in the vicinity of said first axis (5), so that the force means exerts no or just a minor torque in the direction towards the second position of the clamp means, when the clamp means is in its first position.
**characterized in that**
the releasing means is journalled around a second axis (7) in the stand, forming a first arm portion designed like a cap (6) above a vessel (12) for bait, and a second arm portion (10) acting upon the first arm (2) of the clamp means when the cap (6) is lifted by the animal.

2. A trap according to claim 1,
**characterized in that**
the second arm portion (10 ) of the releasing means is provided with a securing member (11), that locks the the first arm (2) of the clamp means when this is in its said first position, which securing member (11) releases the first arm (2) of the clamp member, when the cap (6) is lifted by the animal.

3. A trap according to claim 1
**characterized in that**
there is provided a stop device(13) for preventing the clamp means from being turned to let the first arm (2) of the clamp means take a position in which the second arm portion (10) of the releasing means cannot act upon the first arm (2) of the clamp means.

4. A trap according to claim 1,
**characterized in that**
there is provided guide means (14) for guiding small animals to the bait, preventing larger animals from acting upon the releasing means.

5. A trap according to claim 1,
**characterized in that**
stand is designed with a portion (15) like a platform, extending backwards from the vessel. (12)

6. A trap according to claim 1,
**characterized in that**
the cap (6) and the vessel (12) are designed in such a way, that the bait is optically and from the smell, observable to the animal.

7. A trap according to claim 1,
**characterized in that**
it is provided with an outer shell (16) into which the trap may be inserted to a protected position, which shell (16) is provided with a first opening (17), with such a size, and located in such a way, that it admits animals of a desired, maximum size access to the releasing device (6), and that the shell (16) is provided with with an elongated second opening (18) arranged in such a way, that a string (19) or the like may be led in through the second opening and releasably stretch the clamp means (3) to the first, loaded position.

## Patentansprüche

1. Falle zum Fangen und Töten von kleinen Tieren wie Ratten und Mäusen, mit einem Gestell (1), einer schwenkbaren Klemmeinrichtung, die an dem Gestell um eine erste Achse (5) schwenkbar gelagert ist, wobei die Klemmeinrichtung gegen die Wirkung einer Krafteinrichtung (4) wie einer Feder beansprucht werden kann, und die durch ein Freigabemittel aus einer ersten, belasteten Position gelöst werden kann, wenn ein Tier auf das Freigabemittel einwirkt, so dass die Klemmeinrichtung durch Einwirkung der Krafteinrichtung im wesentlichen sofort in eine zweite Position schwingt, in der sie das Tier trifft und tötet, wobei die Klemmeinrichtung, die sich von der ersten Achse (5) erstreckt, mit einem ersten (2) und einem zweiten (3) Arm versehen ist, ein erster Befestigungspunkt (8) der Krafteinrichtung an dem Ende vorgesehen ist, das von der ersten Achse (5) des ersten Arms (2) gedreht wird, der zweite Befestigungspunkt (9) der Krafteinrichtung an dem Gestell vorgesehen ist, die Kraftlinie zwischen den zwei Befestigungspunkten der Krafteinrichtung durch die oder in der Nähe der ersten Achse (5) verläuft, so dass die Krafteinrichtung kein oder nur ein kleines Drehmoment in Richtung auf die zweite Position der Klemmeinrichtung ausübt, wenn sich die Klemmeinrichtung in ihrer ersten Position befindet,
**dadurch gekennzeichnet, dass** die Freigabeeinrichtung um eine zweite Achse (7) in dem Gestell schwenkbar gelagert ist, einen ersten Armabschnitt bildet, der wie eine Kappe (6) über einem Behälter (12) für einen Köder geformt ist, und ein zweiter Armabschnitt (10) auf den ersten Arm (2) der Klemmeinrichtung einwirkt, wenn die Kappe (6) durch das Tier angehoben wird.

2. Falle nach Anspruch 1,
**dadurch gekennzeichnet, dass** der zweite Armabschnitt (10) der Freigabeeinrichtung mit einem Sicherungselement (11) versehen ist, das den ersten Arm (2) der Klemmeinrichtung verriegelt, wenn diese sich in ihrer ersten Position befindet, wobei das Sicherungselement (11) den ersten Arm (2) des Klemmelementes löst, wenn die Kappe (6) durch ein Tier angehoben wird.

3. Falle nach Anspruch 1,
**dadurch gekennzeichnet, dass** ein Anschlagmittel (13) vorgesehen ist, um zu verhindern, dass die Klemmeinrichtung so gedreht wird, dass der erste Arm (2) der Klemmeinrichtung eine Position einnehmen kann, in der der zweite Armabschnitt (10) der Freigabeeinrichtung nicht auf den ersten Arm (2) der Klemmeinrichtung einwirken kann.

4. Falle nach Anspruch 1,
**dadurch gekennzeichnet, dass** ein Führungsmittel (14) zum Führen von kleinen Tieren zu dem Köder vorgesehen ist, und mit dem verhindert wird, dass größere Tiere auf die Freigabeeinrichtung einwirken können.

5. Falle nach Anspruch 1,
**dadurch gekennzeichnet, dass** das Gestell mit einem Abschnitt (15) nach Art einer Plattforrn ausgebildet ist, die sich von dem Gefäß (12) nach hinten erstreckt.

6. Falle nach Anspruch 1,
**dadurch gekennzeichnet, dass** die Kappe (6) und das Gefäß (12) in der Weise ausgebildet sind, dass der Köder optisch und im Hinblick auf seinen Geruch durch ein Tier wahrnehmbar ist.

7. Falle nach Anspruch 1,
**dadurch gekennzeichnet, dass** sie mit einem äußeren Gehäuse (16) versehen ist, in das die Falle in eine geschützte Position eingesetzt werden kann, wobei das Gehäuse (16) mit einer ersten Öffnung (17) versehen ist, die eine solche Größe aufweist und in der Weise angeordnet ist, dass sie Tieren mit einer gewünschten, maximalen Größe einen Zugang zu der Freigabeeinrichtung (6) ermöglicht, und dass das Gehäuse (16) mit einer verlängerten zweiten Öffnung (18) versehen ist, die in der Weise angeordnet ist, dass eine Schnur (19) oder etwas ähnliches durch die zweite Öffnung geführt werden kann und die Klemmeinrichtung (3) in die erste, gespannte Position lösbar spannen kann.

## Revendications

1. Piège pour attraper et tuer de petits animaux, tels que des rats et des souris, comprenant un support (1), des moyens de serrage pivotants, tourillonnés dans le support autour d'un premier axe (5), lesquels moyens de serrage peuvent être sollicités à l'encontre de l'action de moyens (4) de production de force tels qu'un ressort, et qui peuvent être libérés par des moyens de libération à partir d'une première position chargée, lorsqu'un animal agit sur les moyens de libération, de sorte que les moyens de serrage pivotent sensiblement immédiatement en étant actionnés par les moyens de production de force, pour venir dans une seconde position, dans laquelle ils frappent et tuent l'animal, les moyens de serrage, qui s'étendent à partir du premier axe (5), étant pourvus d'un premier bras (2) et d'un second bras (3), un premier point de fixation (8) desdits moyens de production de force étant prévu sur l'extrémité qui est située à l'opposé du premier axe (5) du premier bras (2), le second point de fixation (9) des moyens de production de force étant prévu au niveau du support, la ligne de force entre les deux points de fixation des moyens d'application de force étant prévue sur le support, la ligne d'application de force entre les deux points de fixation des moyens d'application de force passant par ou au voisinage dudit premier axe (5) de sorte que les moyens d'application de force n'appliquent aucun couple ou seulement un faible couple en direction de la seconde position des moyens de serrage, lorsque les moyens de serrage sont dans leur première position,
**caractérisé en ce que**
les moyens de libération sont tourillonnés autour d'un second axe (7) dans le support, en formant une première partie de bras conçue à la manière d'un capuchon (6) au-dessus d'un récipient (12) pour l'appât, et une seconde partie de bras (10) agissant sur le premier bras (2) des moyens de serrage lorsque le capuchon (6) est soulevé par l'animal.

2. Piège selon la revendication 1, **caractérisé en ce que** la seconde partie de bras (10) des moyens de libération est pourvue d'un élément de fixation (11) qui verrouille le premier bras (2) des moyens de serrage lorsqu'il est situé dans ladite première position, que l'élément de fixation (11) libère le premier bras (2) de l'élément de serrage lorsque le capuchon (6) est soulevé par l'animal.

3. Piège selon la revendication 1, **caractérisé en ce qu'**il est prévu un dispositif de butée (13) pour empêcher que les moyens de serrage pivotent pour amener le premier bras (2) des moyens de serrage dans une position dans laquelle la seconde partie de bras (10) des moyens de libération n'agit pas sur le premier bras (2) des moyens de serrage.

4. Piège selon la revendication 1, **caractérisé en ce qu'**il est prévu des moyens de guidage (14) servant à guider les petits animaux jusqu'à l'appât, en empêchant des animaux plus gros d'agir sur les moyens de libération.

5. Piège selon la revendication 1, **caractérisé en ce que** le support est agencé avec une partie (15) conçue à la manière d'une plateforme, qui s'étend vers l'arrière à partir du récipient (12).

6. Piège selon la revendication 1, **caractérisé en ce que** le capuchon (6) et le récipient (12) sont conçus de telle sorte que l'appât peut être décelé par l'animal optiquement et au moyen de l'odorat.

7. Piège selon la revendication 1, **caractérisé en ce qu'**il est équipé d'une coque extérieure (16), dans laquelle le piège doit être inséré dans une position protégée, laquelle coque (16) est pourvue d'une première ouverture (17) ayant des dimensions et une position telles qu'elle permet à des animaux ayant une taille maximum désirée d'accéder au dispositif de libération (6), et que la coque (16) est pourvue d'une seconde ouverture allongée (18) disposée de telle sorte qu'une corde (19) ou analogue peut être introduite par la seconde ouverture et tirer de façon amovible les moyens de serrage (3) dans la première position chargée.
